# EUROPÄISCHE PATENTSCHRIFT

(11) **EP 1 607 211 B1**
(45) Veröffentlichungstag und Bekanntmachung des Hinweises auf die Patenterteilung: **13.09.2006**
(21) Anmeldenummer: 04102204.7
(22) Anmeldetag: 18.05.2004
(51) Int. Cl.: B29D 11/00, B29C 37/00

(54) **Verfahren und Vorrichtung zum Trennen einer gegossenen Linse von einer Formschale**
Process and Device for Separating a Cast Lens from a Mould
Procédé et dispositif pour la séparation d'une lentille coulée d'un moule

(43) Veröffentlichungstag der Anmeldung: 21.12.2005
(73) Patentinhaber: Interglass Technology AG, 6330 Cham (CH)
(72) Erfinder: Probst, Urs, Dr., 6300 Zug (CH); Arnet, Roman, 6373 Ennetbürgen (CH)
(74) Vertreter: Falk, Urs

(56) Entgegenhaltungen:
- WO-A-02/087861
- US-A- 4 251 474
- US-B1- 6 171 529

## Beschreibung

Die Erfindung betrifft ein Verfahren zum Trennen einer gegossenen Linse von einer Formschale der im Oberbegriff des Anspruchs 1 genannten Art und eine dazu geeignete Vorrichtung.

Aus der internationalen Patentanmeldung WO 02/087861 ist eine Fertigungslinie für die Herstellung von optischen Linsen bekannt. Bei dieser Herstellungsmethode wird ein Monomer in eine durch zwei Formschalen und eine Dichtung begrenzte Kavität gegossen und polymerisiert, wobei die Linse entsteht. Anschliessend wird die Dichtung entfernt und die Linse in einer Trennvorrichtung von den beiden Formschalen getrennt. Die beiden Formschalen werden nacheinander von der Linse getrennt. Die Trennvorrichtung besteht aus einer Halterung, die die Linse festhält, einem Kraftgeber, der eine Kraft auf die Linse ausübt, vorzugsweise an der Schnittstelle zwischen der Linse und der Formschale, und einem zweiten Kraftgeber, der eine Kraft auf die Formschale ausübt.

Das Abtrennen der Linse von den beiden Formschalen ist ein heikler Prozess, bei dem ein erhebliches Risiko besteht, dass die Linse und/oder die Formschalen beim Trennvorgang beschädigt oder zerstört werden. Aus diesem Grund erfolgt das Abtrennen immer noch von Hand, das Trennverfahren der WO 02/087861 hat sich nicht bewährt. In der US 4251474 ist ein Spachtel erwähnt, der zum Trennen der Linse von den Formschalen benutz wird.

Der Erfindung liegt die Aufgabe zugrunde, ein Verfahren und eine Vorrichtung zu entwickeln, die das Abtrennen der Linse von den beiden Formschalen ermöglicht, ohne die Linse oder die Formschalen zu beschädigen.

Die genannte Aufgabe wird erfindungsgemäss gelöst durch die Merkmale der Ansprüche 1, 5 und 10.

Die beiden Formschalen werden allgemein als hintere und vordere Formschale bezeichnet. Bei diesem Verfahren ist es allerdings unwichtig, welche der beiden Formschalen als hintere und welche als vordere Formschale bezeichnet ist. Die der Linse zugewandte Seite einer Formschale wird als Aktivseite und die der Linse abgewandte Seite wird als Passivseite bezeichnet.

Für das Abtrennen der Linse von den beiden Formschalen wird ein Verfahren vorgeschlagen, bei dem das Trennwerkzeug mit einer Kraft auf der Linse entlang der Schnittstelle zwischen der Linse und der von der Linse abzutrennenden Formschale geführt wird. Das Trennwerkzeug ist bevorzugt stumpf ausgebildet und rollt auf der Linse ab, möglichst ohne auf der Linse zu gleiten oder zu schleifen. Es kommt nur auf Relativbewegungen an:
- Es kann entweder das Trennwerkzeug oder der Verbund aus Linse und Formschalen entsprechend der Lage der Schnittstelle verstellt werden.
- Das Trennwerkzeug drückt beim Trennvorgang mit einer vorbestimmten Kraft gegen die Linse oder die Linse wird mit einer vorbestimmten Kraft gegen das Trennwerkzeug gedrückt.
- Es wird entweder der Verbund aus Linse und Formschalen gedreht und das Trennwerkzeug rollt passiv auf der Linse ab oder es wird das Trennwerkzeug gedreht und die Linse rollt passiv auf dem Trennwerkzeug ab.

Der Trennvorgang erfolgt vorzugsweise, indem vom Greifer eine Zugkraft auf die Passivseite der vorderen Formschale, sofern diese abzutrennen ist, bzw. auf die Linse, sofern die Linse von der hinteren Formschale abzutrennen ist, ausgeübt wird. Bei gewissen Linsen kann es jedoch erforderlich sein, dass zu Beginn des Trennvorgangs vom Greifer zunächst eine Druckkraft auf die Formschale bzw. die Linse ausgeübt wird, und erst im Verlaufe des Trennvorgangs, aber bevor die Linse und die abzutrennende Formschale vollständig voneinander gelöst sind, die Druckkraft abgebaut und eine Zugkraft aufgebaut wird. Zug- und Druckkraft können während des Trennvorgangs auch alternierend gemäss einem bestimmten Profil angelegt werden, um den Trennvorgang zu unterstützen.

Der Greifer kann zudem, zusätzlich oder anstelle von Zug- und Druckkraft, eine Scherkraft, d.h. eine seitlich gerichtete Kraft auf die Formschale bzw. die Linse ausüben.

Eine für die Durchführung des Verfahrens besonders geeignete Vorrichtung umfasst eine um eine erste Drehachse drehbare, von einem ersten Motor angetriebene Halterung, die die hintere Formschale festhält, einen Greifer, vorzugsweise einen Sauggreifer, der auf die vordere Formschale bzw. nach deren Entfernung auf die Linse eine Zugkraft ausübt, ein um eine zweite Achse drehbares Trennwerkzeug, das mittels eines Kraftgebers seitlich gegen die Linse gedrückt wird, einen zweiten Motor, um eine längs der ersten Drehachse gemessene Höhe H des Trennwerkzeugs zu verstellen, und eine Steuereinrichtung, die den zweiten Motor so steuert, dass die Höhe H des Trennwerkzeugs der Schnittstelle zwischen der abzutrennenden Formschale und der Linse folgt, dabei jedoch auf die Linse und nicht auf die abzutrennende Formschale drückt.

Die Drehlage der Formschale ist charakterisiert durch einen Drehwinkel θ. Die Formschale weist eine Markierung für den Drehwinkel θ = 0° auf. Bevor der Trennvorgang durchgeführt werden kann, müssen die Drehlage der abzutrennenden Formschale und die Höhe der Schnittstelle zwischen der abzutrennenden Formschale und der Linse als Funktion des Drehwinkels θ bekannt sein. Zudem muss die azimuthale Position θ_{S} des Trennwerkzeugs bekannt sein.

Der der Schnittstelle zugewandte Rand einer Formschale ist mathematisch defmiert durch eine Funktion R(θ), die den Abstand des Randes in Bezug auf eine Referenzstelle der Formschale in Funktion des Drehwinkels θ beschreibt. Die Funktion R(θ) wird entweder für jede Formschale durch eine Messung bestimmt und in einem der Steuereinrichtung zugänglichen Speicher gespeichert oder während des Trennvorgangs mittels eines Sensors erfasst.

Die Lage der Schnittstelle Hᵥ(θ) zwischen der vorderen Formschale und der Linse ergibt sich zu Hᵥ(θ) = H₁ - Rᵥ(θ), wobei die Höhe H₁ die Höhe der Referenzstelle der vorderen Formschale, wenn der Verbund aus der Linse und den beiden Formschalen auf der Halterung fixiert ist, und die Funktion Rᵥ(θ) die der vorderen Formschale zugeordnete Funktion R(θ) bezeichnen. Die Lage der Schnittstelle Hₕ(θ) zwischen der hinteren Formschale und der Linse ergibt sich zu Hₕ(θ) = H₂ + Rₕ(θ), wobei die Höhe H₂ die Höhe der Referenzstelle der hinteren Formschale, wenn der Verbund auf der Halterung fixiert ist, und die Funktion Rₕ(θ) die der hinteren Formschale zugeordnete Funktion R(θ) bezeichnen. Die Höhe H₁ muss vor dem Trennvorgang durch eine Messung ermittelt werden, da die Linse bei der Aushärtung eine gewisse Schrumpfung erfährt, es sei denn, die Linse besteht aus einem Material, das bei der Aushärtung nicht schrumpft. Die Höhe H₂ ist in der Regel konstant und muss daher nur einmal, bei der Kalibrierung der Trennvorrichtung, bestimmt werden.

Die Schnittstelle zwischen der abzutrennenden Formschale und der Linse ist charakterisiert durch eine mathematische Funktion ohne Ausdehnung, während das Trennwerkzeug eine endliche Dicke bzw. Ausdehnung aufweist. Beim Trennen der vorderen Formschale von der Linse wird die Höhe des Trennwerkzeugs in Funktion des Drehwinkels θ geregelt auf eine Höhe Hᵥ(θ) - ΔH₀, wobei die Konstante ΔH₀ einen der Dicke des Trennwerkzeugs angepassten Offsetwert bezeichnet. Die Konstante ΔH₀ beträgt beispielsweise 0.3 mm. Beim Trennen der hinteren Formschale von der Linse wird die Höhe des Trennwerkzeugs in Funktion des Drehwinkels θ geregelt auf eine Höhe Hᵥ(θ) + ΔH₀. So ist in beiden Fällen gewährleistet, dass das Trennwerkzeug jeweils neben der Schnittstelle zwischen der abzutrennenden Formschale und der Linse auf die Linse drückt und der Schnittstelle folgt, dass das Trennwerkzeug aber nicht auf die Formschale drückt.

Es gibt Linsen, die eine Abplattung aufweisen. Die Abplattung kann beispielsweise vom Abgiessen herrühren. Um bei solchen Linsen eine Beschädigung zu vermeiden, wird die vom Trennwerkzeug ausgeübte Kraft reduziert, vorzugsweise auf den Wert Null, wenn sich die Abplattung im Bereich des Trennwerkzeugs befmdet.

Der Trennvorgang kann durch Zuführen eines Trennmittels unterstützt werden, sei es in der Form einer Flüssigkeit, beispielsweise einer Seifenlösung, eines Gases oder eines Pulvers oder einer Mischung davon. Das Trennmittel kann zudem kalt sein, um eine Kühlung der Linse zu bewirken. Alternativ kann das Trennmittel heiss sein, um den Trennvorgang zu unterstützen.

Die vom Trennwerkzeug auf die Linse ausgeübte Kraft kann orthogonal auf die Seitenwand der Linse gerichtet sein oder unter einem konstanten oder einem variierenden, vom Drehwinkel θ abhängigen Winkel.

Die Erfindung wird nachfolgend anhand eines Ausführungsbeispiels und anhand der Zeichnung näher erläutert.

### Es zeigen:

- Fig. 1: eine Vorrichtung zum Abtrennen einer gegossenen Linse von einer vorderen und einer hinteren Formschale in seitlicher Ansicht,
- Fig. 2, 3: Teile der Vorrichtung in seitlicher Ansicht bzw. in einer Schnittzeichnung,
- Fig. 4: eine Linse in Aufsicht,
- Fig. 5-7: verschiedene Kraftprofile, und
- Fig. 8, 9: weitere Vorrichtungen zum Abtrennen einer gegossenen Linse von den Formschalen.

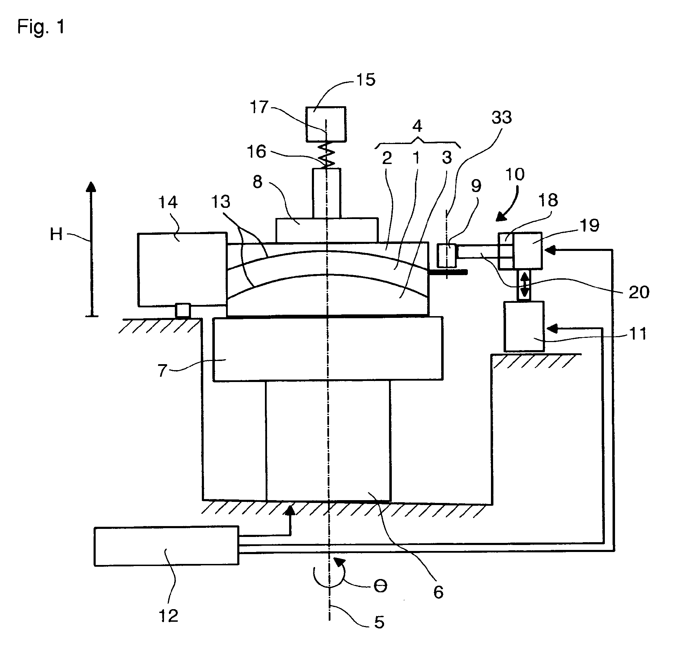

Die Fig. 1 zeigt eine Vorrichtung zum Abtrennen einer gegossenen Linse 1 von einer vorderen Formschale 2 und einer hinteren Formschale 3 schematisch und in seitlicher Ansicht. Die beiden Formschalen 2, 3 und die Linse 1 stellen einen Verbund 4 dar. Die Vorrichtung umfasst eine um eine erste Drehachse 5 drehbare, von einem ersten 6 Motor angetriebene Halterung 7, die die hintere Formschale 3 des Verbunds 4 festhält, einen vorzugsweise als Sauggreifer ausgebildeten Greifer 8, der auf die vordere Formschale 2 bzw. nach deren Entfernung auf die Linse 1 eine Kraft, eine Druckkraft oder eine Zugkraft ausübt, ein Trennwerkzeug 9, das mittels eines Kraftgebers 10 seitlich gegen die Linse 1 gedrückt wird, einen zweiten Motor 11, um eine längs der ersten Drehachse 5 gemessene Höhe H des Trennwerkzeugs 9 zu verstellen, und eine Steuereinrichtung 12, die den zweiten Motor 11 in Abhängigkeit des Drehwinkels θ der abzutrennenden Formschale so steuert, dass das Trennwerkzeug 9 immer unmittelbar neben der Schnittstelle 13 zwischen der abzutrennenden Formschale 2 bzw. 3 und der Linse 1 auf die Linse 1 drückt, d.h. dass die Höhe H des Trennwerkzeugs 9 der Höhe der Schnittstelle 13 nachgeführt wird. Die Vorrichtung umfasst fakultativ eine oder mehrere Gegendruckrollen 14, die der vom Trennwerkzeug 9 ausgeübten Kraft entgegenwirken. Falls zwei Gegendruckrollen 14 vorhanden sind, sind sie symmetrisch bezüglich der Richtung der Kraft angeordnet, die das Trennwerkzeug 9 auf die Linse 1 ausübt.

Der Greifer 8 ist an einem Roboterarm 15 gelagert und zwar vorzugsweise mittels einer Feder 16. Der Greifer 8 ist zudem um eine zweite Drehachse 17 drehbar gelagert, damit der Greifer 8 mit der vorderen Formschale 2 mitdrehen kann, wenn der erste Motor 6 die Halterung 7 mit dem Verbund 4 um die erste Drehachse 5 dreht. Die Drehachse 17 fällt im Idealfall mit der Drehachse 5 zusammen. Da dies wegen unvermeidlicher Toleranzen aber nicht genau erreichbar ist, ist der Greifer 8 mit einem gewissen radialen Spiel am Roboterarm 15 gelagert. Anstelle der Lagerung über die Feder 16 könnte auch eine pneumatische Lagerung des Greifers 8 am Roboterarm 15 vorgesehen sein. Bei dieser Lösung ist die vom Greifer 8 auszuübende Kraft pneumatisch einstellbar.

Der Kraftgeber 10 ist vorzugsweise ein pneumatisch mittels zweier Druckkammern 18, 19 gesteuerter Kolben 20. Der Druck in der ersten Druckkammer 18 ist beispielsweise konstant und der Druck in der zweiten Druckkammer 19 wird von einem Ventil gesteuert. Die Differenz der in den beiden Druckkammern 18, 19 herrschenden Drücke defmiert die vom Kolben 20 ausgeübte Kraft.

Die maximale Auslenkung des Kraftgebers 10 wird durch einen Anschlag begrenzt, um sicherzustellen, dass das Trennwerkzeug 9 beim Trennvorgang, wenn die Linse 1 und die Formschale deformiert werden und zwischen der Linse 1 und der abzutrennenden Formschale 2 bzw. 3 ein Spalt entsteht, nicht in Berührung mit der abzutrennenden Formschale kommt, da die Formschale sonst beschädigt werden könnte.

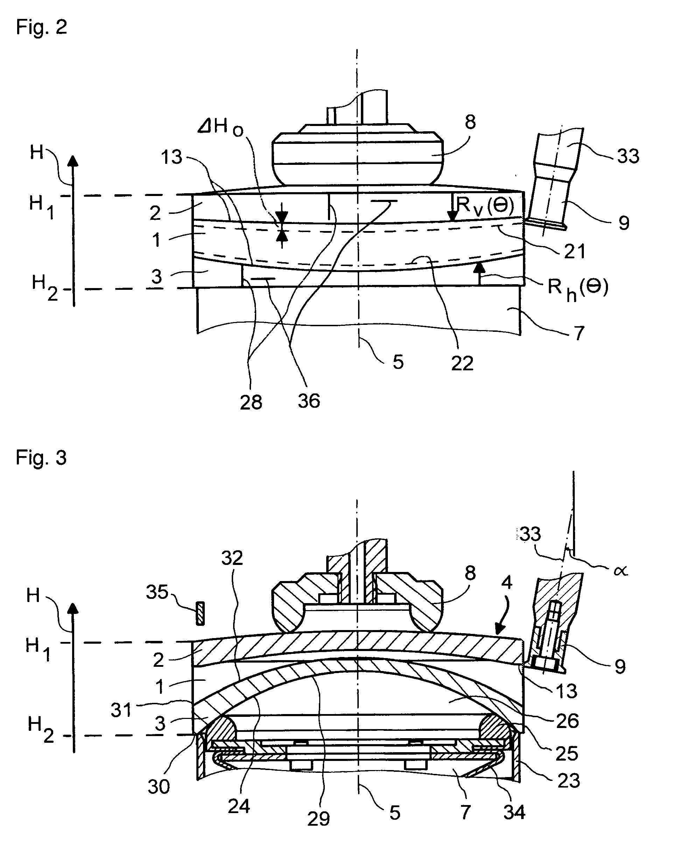

Die Fig. 2 zeigt die Halterung 7, den Greifer 8 und das Trennwerkzeug 9 in seitlicher Ansicht, die Fig. 3 zeigt die gleichen Teile im Schnitt. In der Fig. 2 ist der Verlauf der beiden Schnittstellen 13 ersichtlich. Mit je einer gestrichelten Linie 21 bzw. 22 ist die Kurve dargestellt, auf der das Trennwerkzeug 9 geführt wird.

Die Halterung 7 enthält eine Führung 23 (Fig. 3), auf der die Passivseite 24 der hinteren Formschale 3 aufliegt, und ein deformierbares Dichtungselement 25, das einen zwischen der Halterung 7 und der hinteren Formschale 3 gebildeten Hohlraum 26 abdichtet.

Die vordere und die hintere Formschale 2 bzw. 3 enthalten je eine Markierung 28 (einen sogenannten Tabo Strich, Fig. 2), die als Referenz für den Drehwinkel dient, z.B. den Drehwinkel θ = 0° charakterisiert. Die Passivseite der Formschalen 2, 3 ist in der Regel eine Kugelfläche 29 (Fig. 3), die am Rand in einen ebenen Flächenabschnitt 30 übergeht. Dieser ebene Flächenabschnitt 30 eignet sich schlecht als Referenzfläche für die Funktion R(θ), die die Höhe des Randes der Aktivseite der Formschale charakterisiert. Die Definition und Bestimmung der Funktion R(θ) erfolgt deshalb bevorzugt mit Bezug auf die Kugelfläche 29, und wird am Beispiel der hinteren Formschale 3 näher erläutert, gilt aber in gleicher Weise für die vordere Formschale 2. Die hintere Formschale 3 wird auf die Führung 23 der Halterung 7 aufgelegt. Die Führung 23 ist ein Torus, dessen Grösse so bemessen ist, dass die Kugelfläche der Passivseite 24 im Bereich ihres Randes zur Auflage auf der Führung 23 kommt. Die Formschale wird dabei so auf die Halterung 7 aufgelegt, dass sie möglichst symmetrisch bezüglich der Drehachse 5 ausgerichtet ist. Nun wird die Halterung 7 gedreht, bis die Markierung 28 eine vorbestimmte Lage einnimmt. Die Halterung 7 wird nun einmal um 360° gedreht und dabei die Höhe des Randes 31 der Aktivseite 32 mittels eines Sensors in Funktion des Drehwinkels θ gemessen und als Funktion R(θ) gespeichert. Diese Messung muss nur einmal durchgeführt werden. Sie erfolgt vorzugsweise in einer gesonderten Messstation, die eine gleiche Halterung wie die Halterung 7 enthält. Eine andere Möglichkeit besteht darin, auf dem Rand der Formschalen eine zusätzliche Markierung 36 anzubringen, die als Referenz für die Funktion R(θ) dient.

Das Trennwerkzeug 9 ist bevorzugt eine um eine Achse 33 drehbare Scheibe, deren Rand stumpf ausgebildet ist, damit die Scheibe nicht in die Linse 1 hineinschneidet. Der Rand der Scheibe ist beispielsweise etwa 0.5 mm breit. Die Achse 33 ist eine passive Achse, so dass der Rand der Scheibe auf der Linse 1 ohne zu Gleiten oder Schleifen abrollt, wenn der erste Motor 6 den Verbund 4 dreht. Die Achse 33 des Trennwerkzeugs 9 ist bevorzugt gegenüber der Drehachse 5 um einen vorbestimmten Winkel α geneigt, damit die vom Trennwerkzeug 9 auf die Linse 1 ausgeübte Kraft eine die Zugkraft des Greifers 8 unterstützende Komponente hat. Die Zugkraft des Greifers 8 ist per Defmition entlang der Drehachse 5 und in Richtung weg von der Halterung 7 gerichtet.

Das Trennen der Linse 1 von den beiden Formschalen 2, 3 erfolgt gemäss den folgenden Verfahrensschritten, die jeweils im Detail beschrieben sind:
1. Der aus den beiden Formschalen 2, 3 und der Linse 1 bestehende Verbund 4 wird auf der Halterung 7 platziert und auf dieser fixiert.
   Der Verbund 4 wird vom Roboterarm 15 lagegenau auf der Führung 23 der Halterung 7 platziert, wobei die Passivseite 24 der hinteren Formschale 3 auf der Führung 23 der Halterung 7 aufliegt. Die Platzierung erfolgt so, dass die Passivseite möglichst symmetrisch zur Drehachse 5 ausgerichtet ist. Dabei wird das Dichtungselement 25 und/oder ein das Dichtungselement 25 tragender Faltenbalg 34, deformiert. Der Hohlraum 26 wird nun mit Vakuum beaufschlagt, so dass der Verbund 4 auf der Halterung 7 fixiert ist.
2. Die Drehlage des Verbunds 4 wird so eingestellt, dass die Markierung 28 der vorderen Formschale 2 eine vorbestimmte Drehlage θ = 0° einnimmt.
   Der erste Motor 6 dreht nun die Halterung 7 bis die Markierung 28 der vorderen Formschale 2 eine vorbestimmte Drehlage einnimmt. Dieser Drehlage wird der Winkel θ = 0° zugeordnet. Für die Detektion der Markierung 28 ist ein erster (nicht dargestellter) Sensor vorhanden.
   Die Lage der Schnittstelle Hᵥ(θ) zwischen der vorderen Formschale 2 und der Linse 1 hängt nicht nur von der vorderen Formschale 2, sondern auch von der Dicke der Linse 1, d.h. vom Abstand zwischen den beiden Formschalen 2, 3 ab. Wenn die Linse 1 beim Aushärten schrumpft, kann der Verlauf der Schnittstelle Hᵥ(θ) zwischen der vorderen Formschale 2 und der Linse 1 nicht berechnet werden, sondern muss durch eine Messung mittels eines zweiten (nicht dargestellten) Sensors bestimmt werden. Wenn die Linse 1 beim Aushärten hingegen nicht schrumpft, kann der Verlauf der Schnittstelle Hᵥ(θ) zwischen der vorderen Formschale 2 und der Linse 1 berechnet werden.
3. Es wird die Höhe H₁ bestimmt, die die Referenzstelle der Passivseite der vorderen Formschale 2 annimmt.
   Die Bestimmung der Höhe H₁ erfolgt mittels eines dritten Sensors 35 in der Form eines Wegmesssensors. Der Wegmesssensor ist beispielsweise ein Taster, der abgesenkt wird und einen elektrischen Kontakt schliesst, sobald der Taster die Passivseite der vorderen Formschale 2 berührt. Sobald sich der elektrische Kontakt schliesst, übermittelt der Taster seine aktuelle Position als Höhe H₁ an die Steuereinrichtung 12. Der Taster ist so positioniert, dass er die Höhe H₁ an derjenigen Stelle der Passivseite der vorderen Formschale 2 erfasst, an der die Passivseite bei der Bestimmung der Funktion R(θ) auf der Führung 23 der Halterung 7 auflag.
   Falls die vordere Formschale 2 mit der Markierung 36 versehen ist, dann wird als Höhe H₁ die Höhe der Markierung 36 bestimmt. In diesem Fall ist der dritte Sensor 35 ein optischer Sensor, der nicht oberhalb des Verbunds 4, sondern seitlich neben dem Verbund 4 angeordnet ist.
   Die Steuereinrichtung 12 holt sich die der vorderen Formschale 2 zugeordnete Funktion R(θ) = Rᵥ(θ) aus einem ihr zugänglichen Speicher, die den Abstand des Randes der vorderen Formschale 2 von einer Referenzstelle auf der Passivseite in Funktion des Winkels θ beschreibt. Der Verlauf der Schnittstelle 13 zwischen der vorderen Formschale 2 und der Linse 1 ist gegeben durch Hᵥ(θ) = H₁ - Rᵥ(θ).
4. Das Trennwerkzeug 9 wird in der Höhe richtig positioniert und seitlich gegen die Linse 1 gedrückt.
   Die Steuereinrichtung 12 berechnet nun den Wert Hᵥ(θ=θ_{S}) und steuert den zweiten Motor 11 so an, dass das Trennwerkzeug 9 die Höhe Hᵥ(θ_{S}) - ΔH₀ einnimmt, wobei der Winkel θ_{S} die azimuthale Lage des Trennwerkzeugs 9 und die Konstante ΔH₀ einen der Dicke des Trennwerkzeugs 9 entsprechenden Offsetwert bezeichnen. Anschliessend wird der Kolben 20 des Kraftgebers 10 mit einem vorbestimmten Differenzdruck beaufschlagt, so dass nun das Trennwerkzeug 9 unmittelbar unterhalb der Schnittstelle 13 zwischen der vorderen Formschale 2 und der Linse 1 gegen die Linse 1 drückt.
5. Es wird eine Zugkraft an die vordere Formschale 2 angelegt.
   Der Roboterarm 15 wird um eine vorbestimmte Distanz angehoben. Da jetzt der vom Greifer 8 gehaltene Verbund 4 auf der Halterung 7 fixiert ist, wird die Feder 16 ausgelenkt und der Greifer 8 übt eine durch den Grad der Auslenkung der Feder 16 und deren Federkonstante definierte Zugkraft auf die vordere Formschale 2 aus.
   Alternativ wird zunächst eine Druckkraft an die vordere Formschale 2 angelegt. Die Druckkraft wird aber im Verlaufe des nachfolgenden Verfahrenschrittes 6 - bevor die Linse (1) und die abzutrennende Formschale (2, 3) vollständig voneinander gelöst sind - abgebaut und eine Zugkraft aufgebaut.
   Diese Verfahrensschritte dienten der Vorbereitung. Der eigentliche Trennvorgang zum Abtrennen der vorderen Formschale 2 von der Linse 1 kann jetzt durchgeführt werden. Dabei ist zu beachten, dass sich die Höhe Hᵥ(θ) auf die Linse 1 bezieht, wobei der Winkel θ = 0° der Lage der Markierung 28 entspricht, dass aber das Trennwerkzeug 9 den azimuthalen Winkel θ_{S} aufweist. Es ist also eine Winkeltransformation nötig, die zudem die Drehrichtung der Halterung 7 berücksichtigen muss.
   Wenn die Linse annähernd kreisförmig ist, dann erfolgt der eigentliche Trennvorgang gemäss dem folgenden Verfahrensschritt:
6. Die Steuereinrichtung 12 veranlasst den ersten Motor 6 zu drehen und regelt den zweiten Motor 11 so, dass die Höhe H_{Ist} des Trennwerkzeugs 9 entsprechend dem aktuellen Drehwinkel θ der vorderen Formschale 2 die Höhe Hᵥ(θ_{S}-θ) - ΔH₀ einnimmt.
   Die Steuereinrichtung 12 und der erste Motor 6 arbeiten in an sich bekannter Weise so zusammen, dass der Steuereinrichtung 12 der Drehwinkel θ der vorderen Formschale 2 bekannt ist.

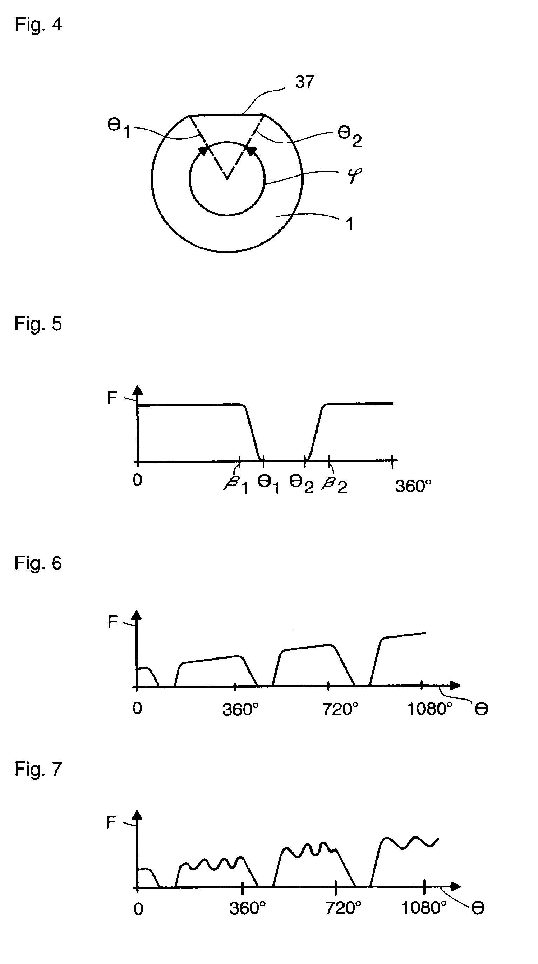

   Die Fig. 4 zeigt in Aufsicht eine Linse 1 mit einer Abplattung 37. Der Rand der Linse 1 ist über einen weiten Winkelbereich ϕ kreisförmig und innerhalb des komplementären Winkelbereichs 360°- ϕ gerade. Dieser gerade Abschnitt entspricht der Abplattung. Der Winkel θ₁, bei dem der gerade Abschnitt beginnt, und der Winkel θ₂, bei dem der gerade Abschnitt endet, sind an sich, allerdings nicht sehr genau, bekannt. Es besteht ein gewisses Risiko, dass die vordere Formschale 2 oder die Linse 1 an den Enden der Abplattung 37 beschädigt werden. Um dieses Risiko zu eliminieren, wird die vom Kraftgeber 10 erzeugte Kraft entweder stark reduziert, vorzugsweise auf den Wert Null, oder es wird das Trennwerkzeug 9 sogar vom Verbund 4 abgehoben, jedesmal und solange sich die Abplattung 37 im Bereich des Trennwerkzeugs 9 befindet, d.h. für Winkel θ₁ < θ < θ₂ oder für Winkel θ₁-δ < θ < θ₂+δ, wobei der Winkel δ einen kleinen Toleranzwinkel darstellt, der der Ungenauigkeit Rechnung trägt, mit der die Winkel θ₁ und θ₂ bekannt sind.
   Wenn die Linse eine solche Abplattung 37 enthält, dann erfolgt das Abtrennen deshalb vorzugsweise gemäss dem folgenden Verfahrensschritt:
6'. Die Steuereinrichtung 12 veranlasst den ersten Motor 6 zu drehen und regelt erstens den zweiten Motor 11 so, dass die Höhe H_{Ist} des Trennwerkzeugs 9 entsprechend dem aktuellen Drehwinkel θ der vorderen Formschale 2 die Höhe Hᵥ(θ_{S}-θ) - ΔH₀ einnimmt, und regelt zweitens die vom Kraftgeber 10 ausgeübte Kraft F gemäss einem vorbestimmten, vom Drehwinkel θ abhängigen Profil F(θ_{S}-θ).
   Die Fig. 5 zeigt ein erstes Beispiel für ein Kraftprofil F(θ). Der Drehwinkel θ erstreckt sich naturgemäss über einen Bereich von 0° bis 360°. Die Kraft F ist konstant in den Bereichen 0° bis β₁ und β₂ bis 360°, wobei der Winkel β₁ < θ₁ und der Winkel β₂ > θ₂ ist. Im Bereich β₁ bis θ₁ wird die Kraft F auf den Wert Null abgebaut, im Bereich θ₂ bis β₂ wird die Kraft wieder auf den konstanten Wert aufgebaut.
   Die Fig. 6 zeigt ein zweites Beispiel für ein Kraftprofil F(θ), bei dem die angelegte Kraft über mehrere Umdrehungen (dargestellt sind 3*360°) der Halterung 7 kontinuierlich ansteigt.
   Die Fig. 7 zeigt ein drittes Beispiel für ein Kraftprofil F(θ), bei dem die angelegte Kraft zusätzlich einen Vibrationsanteil aufweist.
   Wenn der Trennvorgang beendet ist, hebt die vordere Formschale 2 infolge der vom Greifer 8 ausgeübten Zugkraft von der Linse 1 ab. Auf diese Weise ist gewährleistet, dass die Linse 1 nicht verkratzt werden kann, sobald die Linse 1 und die vordere Formschale 2 voneinander getrennt sind. Sobald ein Sensor dieses Abheben detektiert, stoppt die Steuereinrichtung 12 den ersten Motor 6 und bewegt den Kraftgeber 10 in seine Ruhestellung, in der das Trennwerkzeug 9 den Verbund 4 nicht mehr berührt. Der Roboterarm 15 deponiert die abgelöste vordere Formschale 2 auf einem Transportband.
   Nun erfolgt auf analoge Weise das Abtrennen der Linse 1 von der hinteren Formschale 3. Die Steuereinrichtung 12 holt sich die der hinteren Formschale 3 zugeordnete Funktion R(θ) = Rₕ(θ) aus dem Speicher, die den Abstand des Randes der hinteren Formschale 3 von ihrer Passivseite in Funktion des Winkels θ beschreibt. Die Höhe H₂ der hinteren Formschale 3 ist durch die Höhe H₂ der Führung 23 der Halterung 7 definiert und muss nicht jedesmal bestimmt werden. Der Verlauf der Schnittstelle zwischen der hinteren Formschale 3 und der Linse 1 ist gegeben durch Hₕ(θ) = H₂ + Rₕ(θ). Falls die hintere Formschale 3 jedoch mit der Markierung 36 versehen ist, dann wird als Höhe H₂ die Höhe der Markierung 36 bestimmt.
7. Die Drehlage des Verbunds 4 wird so eingestellt, dass die Markierung 28 der hinteren Formschale 3 eine vorbestimmte Drehlage θ=0° einnimmt.
8. Das Trennwerkzeug 9 wird auf die Höhe Hₕ(θ=θ_{S}) + ΔH₀ positioniert und gegen den Verbund 4 gedrückt.
9. Der Greifer 8 kontaktiert die Linse 1 und übt eine Kraft, in der Regel eine Zugkraft, auf die Linse 1 aus.
   Der eigentliche Trennvorgang zum Abtrennen der Linse 1 von der hinteren Formschale 3 kann jetzt durchgeführt werden:
10.Die Steuereinrichtung 12 veranlasst den ersten Motor 6 zu drehen und regelt den zweiten Motor 11 so, dass die Höhe H_{Ist} des Trennwerkzeugs 9 entsprechend dem aktuellen Drehwinkel θ der hinteren Formschale 3 die Höhe Hₕ(θ_{S}-θ) + ΔH₀ einnimmt.
bzw. bei Linsen mit einer Abplattung 37
10.Die Steuereinrichtung 12 veranlasst den ersten Motor 6 zu drehen und regelt erstens den zweiten Motor 11 so, dass die Höhe H_{Ist} des Trennwerkzeugs 9 entsprechend dem aktuellen Drehwinkel θ der hinteren Formschale 3 die Höhe Hₕ(θ_{S}-θ) + ΔH₀ einnimmt, und regelt zweitens die vom Kraftgeber 10 ausgeübte Kraft F gemäss einem vorbestimmten, vom Drehwinkel θ abhängigen Profil F(θ_{S}-θ).

Wenn der Trennvorgang beendet ist, hebt die Linse 1 infolge der vom Greifer 8 ausgeübten Zugkraft von der hinteren Formschale 3 ab. Sobald der Sensor dieses Abheben detektiert, stoppt die Steuereinrichtung 12 den ersten Motor 6 und bewegt den Kraftgeber 10 in seine Ruhestellung. Der Roboterarm 15 deponiert die Linse 1 und anschliessend die hintere Formschale 3 auf dem Transportband.

Wenn der Trennvorgang durch Zuführen eines Trennmittels unterstützt werden soll, dann ist neben dem Trennwerkzeug 9 eine Düse angeordnet, die das Trennmittel auf die vom Trennwerkzeug 9 bearbeitete Fläche befördert.

Im Beispiel war die Grösse ΔH₀ eine Konstante. Die Grösse ΔH₀ kann aber auch eine vom Drehwinkel θ abhängige Grösse ΔH₀(θ) sein. Auf diese Weise kann auch eine während des Trennvorgangs zunehmende Verformung der abzutrennenden Formschale berücksichtigt werden.

Die beschriebene Vorrichtung zeichnet sich durch einen einfachen Aufbau aus. Da es aber nur auf eine Relativbewegung ankommt, wenn das Trennwerkzeug der Schnittstelle 13 zwischen der abzutrennenden Formschale und der Linse folgen muss, könnte auch die Höhe des Trennwerkzeugs 9 konstant gehalten und die Höhe der Halterung 7 verstellbar ausgebildet sein. Zudem könnte der Kraftgeber 10 auf die Halterung 7 oder auf eine Gegendruckrolle 14 einwirken (und nicht auf das Trennwerkzeug 9), um die vom Trennwerkzeug 9 auf die Linse 1 einzuwirkende Kraft zu erzeugen. Der Verlauf der Schnittstelle 13 kann auch während des Trennvorgangs mittels eines Sensors gemessen werden, wobei das Ausgangssignal des Sensors von der Steuereinrichtung 12 verarbeitet und in einen Stellbefehl für den zweiten Motor 11 des Trennwerkzeugs 9 umgesetzt wird.

Bei der beschriebenen Vorrichtung dreht der erste Motor 6 die Halterung 7 und das Trennwerkzeug 9 wird passiv mitgedreht. Umgekehrt könnte der erste Motor 6 das Trennwerkzeug 9 drehen und die Halterung 7 passiv mitdrehen.

Die beschriebene Vorrichtung weist zwei Gegendruckrollen 14 und ein einziges Trennwerkzeug 9 auf. Es ist aber auch möglich, mehr als ein Trennwerkzeug vorzusehen, beispielsweise zwei oder drei, und die Zahl der Gegendruckrollen zu reduzieren. Dabei wird die Höhe jedes Trennwerkzeugs einzeln entsprechend seiner azimuthalen Position und des Drehwinkels θ der abzutrennenden Formschale 2 bzw. 3 von der Steuereinrichtung 12 geregelt.

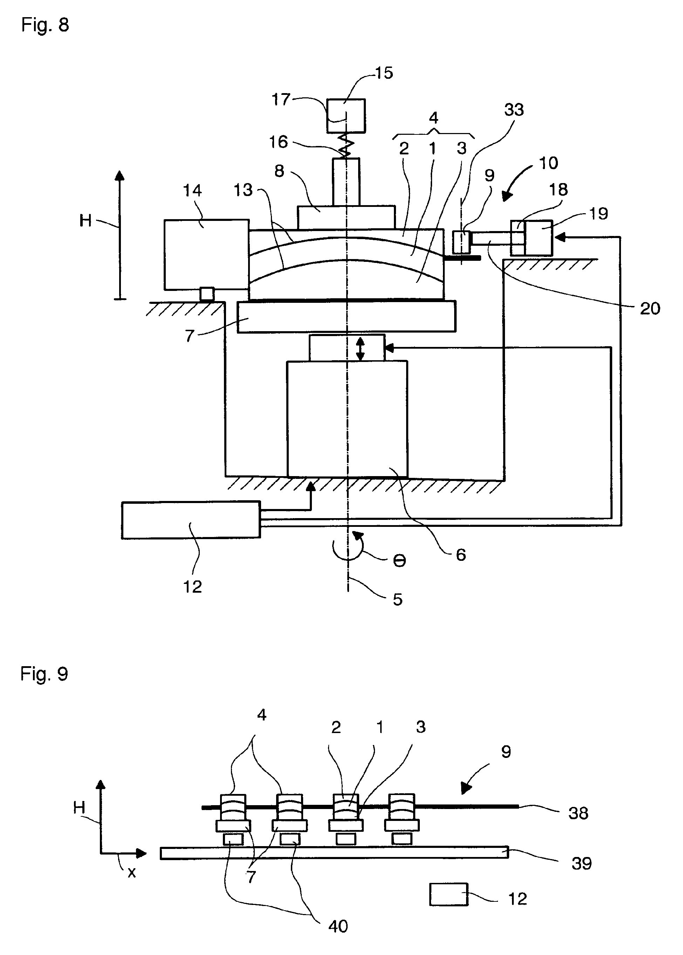

Die Fig. 8 zeigt eine weitere Vorrichtung, bei der das Trennwerkzeug 9 eine feste Höhe einnimmt und der zweite Motor 11 die Höhe H der Halterung 7 einstellen kann.

Die Fig. 9 zeigt eine als Durchlaufstation ausgebildete Vorrichtung zum Abtrennen gegossener Linsen von ihren Formschalen. Die Vorrichtung enthält ein Trennwerkzeug 9 mit einer fixen Höhe H in der Form einer geraden, vorzugsweise stumpfen Klinge 38 und mehrere Halterungen 7 für die Aufnahme je eines vollständigen Verbunds 4 oder eines Verbunds 4, dessen eine Formschale bereits abgetrennt worden ist. Die Halterungen 7 werden von einem linearen Förderantrieb 39 parallel zum Trennmittel 38 in der mit x bezeichneten Richtung transportiert, wobei die Linsen 1 gegen das Trennmittel 38 gedrückt werden (oder das Trennmittel 38 gegen die Linsen 1) und auf dem Trennmittel 38 abrollen. Die Höhe H einer jeden Halterung 7 ist mittels eines in die Halterung 7 integrierten Motors 40 einzeln einstellbar. Die Steuereinrichtung 12 steuert die Höhe H jeder einzelnen Halterung 7 individuell, so dass die Höhe jeder Halterung 7 entsprechend ihrem aktuellen Drehwinkel der Schnittstelle zwischen der Linse 1 und der von der Linse 1 abzutrennenden Formschale 2 oder 3 folgt. Jeder Halterung 7 ist zudem ein (nicht dargestellter) Greifer zugeordnet, der eine Zug-, Druck- und/oder Scherkraft auf die vordere Formschale 2 bzw. auf die Linse 1 ausübt. Der Roboter übergibt den Verbund 4 auf der Eingangseite der Vorrichtung an eine Halterung 7.

Es wurden hier zu illustrativen Zwecken gegenwärtig bevorzugte Ausführungsbeispiele der Erfindung dargestellt und beschrieben, doch es sind zahlreiche Variationen und Modifikationen möglich, die innerhalb des Konzepts und des Geltungsbereichs dieser Erfindung bleiben.

Es wird hier explizit nochmals darauf hingewiesen, dass es in den Ansprüchen keine Rolle spielt, welche der beiden Formschalen als hintere Formschale und welche als vordere Formschale bezeichnet wird.

## Patentansprüche

1. Verfahren zum Trennen einer gegossenen Linse (1) von einer Formschale (2; 3), **dadurch gekennzeichnet, dass** ein Trennwerkzeug (9) mit einer Kraft auf der Linse (1) entlang der Schnittstelle zwischen der Linse (1) und der Formschale (2, 3) geführt wird, wobei entweder der Verbund aus Linse (1) und Formschale (2; 3) gedreht wird und das Trennwerkzeug (9) passiv auf der Linse (1) abrollt oder das Trennwerkzeug (9) gedreht wird und die Linse (1) passiv auf dem Trennwerkzeug (9) abrollt.

2. Verfahren nach Anspruch 1, **dadurch gekennzeichnet, dass** die Kraft gemäss einem vom Drehwinkel der Formschale (2, 3) abhängigen Profil geregelt wird.

3. Verfahren nach Anspruch 1 oder 2, **gekennzeichnet durch** die Schritte:
- Fixieren des aus der Linse (1) und einer oder zwei Formschalen (2; 3) bestehenden Verbunds (4) auf einer um eine Drehachse (5) drehbaren Halterung (7), wobei der Drehwinkel der abzutrennenden Formschale (2, 3) als Drehwinkel θ bezeichnet ist,
- Einstellen einer Höhe des Trennwerkzeugs (9) oder der Halterung (7) und Beaufschlagen des Trennwerkzeugs (9) mit der Kraft, so dass das Trennwerkzeug (9) neben der Schnittstelle (13) zwischen der abzutrennenden Formschale (2; 3) und der Linse (1) gegen die Linse (1) drückt, und
- Drehen der Halterung (7), wobei die Höhe des Trennwerkzeugs (9) oder die Höhe der Halterung (7) entsprechend dem aktuellen Drehwinkel θ dem Verlauf der Höhe der Schnittstelle (13) nachgeführt wird.

4. Verfahren nach einem der Ansprüche 1 bis 3, wobei die auf der Halterung (7) fixierte Formschale als hintere Formschale (3) bezeichnet ist, **dadurch gekennzeichnet, dass** eine weitere Kraft an die vordere Formschale (2) bzw. an die Linse (1), wenn die hintere Formschale (3) von der Linse (1) abzutrennen ist, angelegt wird und dass die weitere Kraft bereits zu Beginn des Trennvorgangs oder mindestens bevor die Linse (1) und die abzutrennende Formschale (2, 3) vollständig voneinander gelöst sind, als Zugkraft aufgebaut wird.

5. Vorrichtung zum Trennen einer zwischen einer vorderen und einer hinteren Formschale (2, 3) eingegossenen Linse (1) von den beiden Formschalen (2, 3), **gekennzeichnet durch**
- eine um eine erste Drehachse (5) drehbare Halterung (7), auf der die hintere Formschale (3) fixierbar ist, wobei die Drehlage der abzutrennenden Formschale (2, 3) **durch** einen Drehwinkel θ charakterisiert ist,
- einen um eine zweite Drehachse (17) drehbaren Greifer (8), um auf die vordere Formschale (2) bzw. nach deren Entfernung auf die Linse (1) eine Kraft auszuüben,
- einen Kraftgeber (10) und ein Trennwerkzeug (9), das um eine dritte Drehachse (33) drehbar ist und das mittels des Kraftgebers (10) seitlich gegen die Linse (1) gedrückt wird,
- einen ersten Motor (6), um die Halterung (7) oder das Trennwerkzeug (9) zu drehen,
- einen zweiten Motor (11), um eine längs der ersten Drehachse (5) gemessene Höhe H des Trennwerkzeugs (9) oder der Halterung (7) zu verstellen,
- eine Steuereinrichtung (12), die den zweiten Motor (11) so steuert, dass das Trennwerkzeug (9) neben der Schnittstelle (13) zwischen der abzutrennenden Formschale (2, 3) und der Linse (1) auf die Linse (1) drückt, wobei die Höhe H des Trennwerkzeugs (9) bzw. der Halterung (7) der Höhe der Schnittstelle (13) zwischen der abzutrennenden Formschale (2, 3) und der Linse (1) in Abhängigkeit vom Drehwinkel θ folgt.

6. Vorrichtung nach Anspruch 5, **dadurch gekennzeichnet, dass** die Steuereinrichtung (12) die vom Kraftgeber (10) ausgeübte Kraft gemäss einem vom Drehwinkel θ abhängigen Profil regelt.

7. Vorrichtung nach Anspruch 5 oder 6, **dadurch gekennzeichnet, dass** die dritte Drehachse (33) des Trennwerkzeugs (9) gegenüber der ersten Drehachse (5) um einen vorbestimmten Winkel (α) geneigt ist.

8. Vorrichtung nach einem der Ansprüche 5 bis 7, **dadurch gekennzeichnet, dass** die dritte Drehachse (33) des Trennwerkzeugs (9) gegenüber der ersten Drehachse (5) verstellbar ist.

9. Vorrichtung zum Trennen einer zwischen einer vorderen und einer hinteren Formschale (2, 3) eingegossenen Linse (1) von den beiden Formschalen (2, 3), **gekennzeichnet durch**
- ein Trennwerkzeug (9) mit einem geraden Trennmittel (38),
- mehrere um eine Achse drehbare Halterungen (7), auf der die hintere Formschale (3) fixierbar ist, mit je einem Motor (40), um eine Höhe der Halterung (7) relativ zum Trennmittel (38) zu verstellen,
- einen linearen Förderantrieb (39), der die Halterungen (7) parallel zum Trennmittel (38) transportiert, wobei die Linsen (1) auf dem Trennmittel (38) abrollen, und
- eine Steuereinrichtung (12), die die Motoren (40) der Halterungen (7) individuell so steuert, dass die Höhe der Linse (1) der Höhe der Schnittstelle zwischen der Linse (1) und der von der Linse (1) abzutrennenden Formschale (2; 3) folgt.

## Claims

1. Method for separating a cast lens (1) from a shell mold (2; 3), **characterised in that** a separating tool (9) is guided with a force on the lens along the interface between the lens (1) and the shell mold (2, 3), wherein either the composite of lens (1) and shell mold (2; 3) is rotated and the separating tool (9) rolls passively on the lens (1) or the separating tool (9) is rotated and the lens (1) rolls passively on the separating tool (9).

2. Method according to claim 1, **characterised in that** the force is controlled according to a profile dependent on the angle of rotation of the shell mold (2, 3).

3. Method according to claim 1 or 2, **characterised by** the steps:
- Fixing the composite (4) consisting of the lens (1) and one or two shell molds (2; 3) onto a holding device (7) rotatable on an axis of rotation (5) whereby the angle of rotation of the shell mold (2, 3) to be separated is designated as angle of rotation θ,
- Adjusting a height of the separating tool (9) or the holding device (7) and applying the force to the separating tool (9) so that the separating tool (9) presses against the lens (1) adjacent to the interface (13) between the shell mold (2; 3) to be separated and the lens (1), and
- Rotating the holding device (7), whereby the height of the separating tool (9) or the height of the holding device (7) is adjusted to the course of the height of the interface (13) according to the actual angle of rotation θ.

4. Method according to any of claims 1 to 3, whereby the shell mold fixed to the holding device (7) is designated as rear shell mold (3), **characterised in that** a further force is applied to the front shell mold (2) or the lens (1) when the rear shell mold (3) is to be separated from the lens (1) and that the further force is already built up as a tensile force at the start of the separation process or at least before the lens (1) and the shell mold (2, 3) to be separated are completely separated from each other.

5. Device for separating a lens (1) cast between a front and a rear shell mold (2, 3) from the two shell molds (2, 3), **characterised by**
- A holding device (7) rotatable on a first axis of rotation (5), on which the rear shell mold (3) can be fixed, whereby the rotational position of the shell mold (2, 3) to be separated is **characterised by** an angle of rotation θ,
- a gripper (8) rotatable on a second axis of rotation (17) for exerting a force on the front shell mold (2) or, after its removal, on the lens (1),
- a force transmitter (10) and a separating tool (9) rotatable on a third axis of rotation (33) and that is pressed laterally against the lens (1) by means of the force transmitter (10),
- a first motor (6) for rotating the holding device (7) or the separating tool (9),
- a second motor (11) for adjusting a height H of the separating tool (9) or the holding device (7) measured along the first rotational axis (5),
- a control device (12) that controls the second motor (11) so that the separating tool (9) presses on the lens (1) adjacent to the interface (13) between the shell mold (2, 3) to be separated and the lens (1), whereby the height H of the separating tool (9) or the holding device (7) follows the height of the interface (13) between the shell mold (2, 3) to be separated and the lens (1) dependent on the angle of rotation θ.

6. Device according to claim 5, **characterised in that** the control device (12) controls the force exerted by the force transmitter (10) according to a profile dependent on the angle of rotation θ.

7. Device according to claim 5 or 6, **characterised in that** the second axis of rotation (33) of the separating tool (9) is inclined by a predetermined angle (α) in relation to the first axis of rotation (5).

8. Device according to any of claims 5 to 7, **characterised in that** the second axis of rotation (33) of the separating tool (9) is adjustable in relation to the first axis of rotation (5).

9. Device for separating a lens (1) cast between a front and a rear shell mold (2, 3) from the two shell molds (2, 3), **characterised by**
- a separating tool (9) with a straight separating means (38),
- several holding devices (7) rotatable on an axis and on which the rear shell mold (3) can be fixed, each with a motor (40) in order to adjust a height of the holding device (7) relative to the separating means (38),
- a linear conveyor drive (39) that transports the holding devices (7) parallel to the separating means (38), whereby the lenses (1) roll on the separating means (38), and
- a control device (12) that individually controls the motors (40) of the holding devices (7) so that the height of the lens (1) follows the height of the interface between the lens (1) and the shell molds (2; 3) to be separated from the lens (1).

## Revendications

1. Procédé pour séparer une lentille moulée (1) d'une coque de moulage (2, 3), **caractérisé en ce qu'**un outil de séparation (9) est guidé avec une force sur la lentille (1) le long de l'interface entre la lentille (1) et la coque de moulage (2, 3), où soit le composite de la lentille (1) et de la coque de moulage (2, 3) est tourné et l'outil (9) de séparation roule de façon passive sur la lentille (1), soit l'outil de séparation (9) est tourné et la lentille (1) roule de façon passive sur l'outil de séparation (9).

2. Procédé selon la revendication 1, **caractérisé en ce que** la force est réglée selon un profile dépendant de l'angle de rotation de la coque de moulage (2, 3).

3. Procédé selon la revendication 1 ou 2, **caractérisé par** les étapes suivantes:
- fixation du composite (4) composé de la lentille (1) et d'une ou deux coques de moulage (2; 3) sur un support (7) susceptible de tourner autour d'un axe de rotation (5); l'angle de rotation de la coque de moulage (2, 3) à séparer étant appelé angle de rotation θ,
- mise au point d'une hauteur de l'outil de séparation (9) ou du support (7) et application d'une force sur l'outil de séparation (9), de manière à pousser l'outil de séparation (9) contre la lentille (1) auprès de l'interface (13) entre la coque de moulage (2; 3) à séparer et la lentille (1), et
- rotation du support (7), où la hauteur de l'outil de séparation (9) ou la hauteur du support (7) suit la course de la hauteur de l'interface (13) selon l'angle de rotation θ actuel.

4. Procédé selon une des revendications 1 à 3, où la coque de moulage fixée sur le support (7) est appelée coque de moulage arrière, **caractérisé en ce qu'**une force supplémentaire est appliquée sur la coque de moulage avant (2), respectivement sur la lentille (1), lorsque la coque de moulage arrière (3) doit être séparée de la lentille (1), et **en ce que** la force supplémentaire est réalisée en tant que force de traction déjà au début du processus de séparation ou au moins avant la lentille (1) et la coque de moulage (2, 3) à séparer sont complètement séparées.

5. Dispositif pour séparer une lentille (1) moulée entre une coque de moulage (2, 3) avant et arrière des deux coques de moulage (2, 3) **caractérisé par**:
- un support (7) susceptible d'être tourné autour d'un premier axe de rotation (5), sur lequel support on peut fixer la coque de moulage arrière (3), la position de rotation de la coque de moulage (2, 3) à séparer étant **caractérisée par** un angle de rotation θ,
- une pince (8) susceptible d'être tournée autour d'un deuxième axe de rotation (17), pour exercer une force sur la coque de moulage (2) avant, respectivement après son enlèvement sur la lentille (1),
- un transmetteur de force (10) et un outil de séparation (9), lequel outil peut être tourné autour d'un troisième axe de rotation (33) et qui est poussé latéralement contre la lentille (1) au moyen du transmetteur de force (10),
- un premier moteur (6) pour tourner le support (7) ou l'outil de séparation (9),
- un deuxième moteur (11) pour régler une hauteur H de l'outil de séparation (9) ou du support (7), la hauteur mesurée le long du premier axe de rotation (5),
- un dispositif de commande (12) qui commande le deuxième moteur (11) de manière à ce que l'outil de séparation (9) pousse contre la lentille (1) auprès de l'interface (13) entre la coque de moulage (2; 3) à séparer et la lentille (1), où la hauteur H de l'outil de séparation (9), respectivement du support (7), suit la hauteur de l'interface (13) entre la coque de moulage (2, 3) à séparer et la lentille (1) en fonction de l'angle de rotation θ.

6. Dispositif selon la revendication 5, **caractérisé en ce que** le dispositif de commande (12) règle la force exercée par le transmetteur de force (10) selon un profil dépendant de l'angle de rotation θ.

7. Dispositif selon la revendication 5 ou 6, **caractérisé en ce que** le troisième axe (33) de l'outil de séparation (9) est incliné d'un angle prédéterminé (α) par rapport au premier axe (5) de rotation.

8. Dispositif selon une des revendications 5 à 7, **caractérisé en ce que** le troisième axe (33) de l'outil de séparation (9) peut être réglé par rapport au premier axe (5) de rotation.

9. Dispositif pour séparer une lentille (1) moulée entre une coque de moulage (2, 3) avant et arrière des deux coques de moulage (2, 3), **caractérisé par**:
- un outil de séparation (9) avec un moyen de séparation droit (38),
- plusieurs supports (7) pivotant autour d'un axe, sur lesquels supports on peut fixer la coque de moulage arrière (3), avec à chaque fois un moteur (40), pour régler une hauteur du support (7) par rapport au moyen de séparation (38),
- un entraînement de transport linéaire (40) qui transporte les supports (7) de façon parallèle par rapport au moyen de séparation, où les lentilles (1) roulent sur le moyen de séparation (38), et
- un dispositif de commande (12) qui commande les moteurs (40) des supports (7) individuellement de manière à ce que la hauteur de la lentille (1) suive la hauteur de l'interface entre la lentille (1) et la coque de moulage (2; 3) à séparer de la lentille (1).
